# EUROPÄISCHE PATENTSCHRIFT

(11) **EP 3 029 366 B1**
(45) Veröffentlichungstag und Bekanntmachung des Hinweises auf die Patenterteilung: **25.03.2020**
(21) Anmeldenummer: 15196642.1
(22) Anmeldetag: 27.11.2015
(51) Int. Cl.: F16M 11/04, F16M 11/18, F16M 11/28, F16M 11/38, A47C 3/34, B66F 1/00

(54) **HEBEANORDNUNG FÜR TISCHE, STÜHLE, ROSTE, KINDERSESSEL ODER ANDERE ANZUHEBENDE GEGENSTÄNDE**
LIFTING ASSEMBLY FOR TABLES, CHAIRS, GRIDS, BOOSTER SEATS OR OTHER ITEMS WHICH REQUIRE LIFTING
SYSTÈME DE LEVAGE DE TABLES, CHAISES, SOMMIERS, SIÈGES POUR ENFANTS OU AUTRES OBJETS À SOULEVER

(30) Priorität: 05.12.2014 IT BZ20140052
(43) Veröffentlichungstag der Anmeldung: 08.06.2016
(73) Patentinhaber: Salin, Roberto, 39100 Bolzano (IT)
(72) Erfinder: Salin, Roberto, 39100 Bolzano (IT)
(74) Vertreter: Ausserer, Anton

(56) Entgegenhaltungen:
- WO-A2-2006/112857
- US-A- 4 249 749
- US-A1- 2014 183 430

## Beschreibung

Die vorliegende Erfindung bezieht sich auf eine Hebeanordnung für Tische, Stühle, Roste, Kindersessel oder andere anzuhebende Gegenstände, gemäß dem Oberbegriff des Anspruchs 1.

Beschrieben wird eine Hebeanordnung, die, außer dass sie manuell ist, für schwere Lasten einen Hebemechanismus benötigt, nach der Art sowie in der italienischen Patentanmeldung BZ 2013 A 000 017 vom 18.03.2013 desselben Anmelders beschrieben oder mit anderen bekannten Mitteln. Wie bekannt stehen für das Heben von schweren Lasten im Hochbau, Maschinenbau und auf den verschiedensten Gebieten die Krane und die Flaschenzüge zur Verfügung, die Plattformen usw. anheben können, um sie auf eine gewünschte Höhe zu bringen. Der Vorteil einer solchen Anordnung besteht in einer Mindesthöhe vom Boden in Ruhestellung (in einigen Fällen kann die Last im Boden verborgen bzw. eingelassen sein) und mit einer Breite/Länge, die sich je nach der Höhe ändert, die man erreichen möchte. Ein solches System das einerseits einfach und wirtschaftlich ist kann für das Heben von Tischen, Stühlen, Küchen und die entsprechenden Platten usw. und in besonderer Weise für Kinderstühle verwendet werden.

In solchen Fällen kann bei Abwesenheit eines unterstützten Hebens, sollte das anzuhebende Gewicht, um dasselbe auf die gewünschte Höhe zu bringen, nicht übermäßig sein, kann das Anheben manuell erfolgen.

US 4 249 749 (Dokument D1) offenbart eine Hebeanordnung für Tische, Stühle, Roste, Kindersessel oder andere anzuhebende Gegenstände, umfassend mindestens eine senkrecht verstellbare, einer Basis und dem Boden eines anzuhebenden Möbels oder Gegenstandes angeordnete Tragstruktur und eine Sperrklinke, die dazu bestimmt ist, die Tragstruktur in einer Stellung gewünschter Höhe zu halten, wobei die Tragstruktur durch mindestens eine Storchschnabelanordnung gebildet ist, die aus einer Vielzahl von aneinander angelenkten Parallelogrammen besteht, von denen ein bewegliches Teil mit der Sperrklinke versehen ist, die in einem der Sperre eingreift.

Auch WO 2006/112857 (Dokument D2) offenbart eine Hebeanordnung wie D1.

Die Aufgabe der vorliegenden Erfindung besteht darin, eine Hebeanordnung vorzuschlagen, die im Stande ist Gegenstände auf verschiedene Höhen anzuheben, und zwar an bestimmten Positionen oberhalb einer Auflage.

Diese Aufgabe wird durch eine Hebeanordnung gelöst, die aus Storchnabelelementen mit den Merkmalen des Anspruchs 1 besteht.

Gemäß der Erfindung umfasst die Hebeanordnung für Tische, Stühle, Roste, Kindersessel oder andere anzuhebende Gegenstände mindestens eine senkrecht verstellbare, zwischen einer Basis und dem Boden eines anzuheben Möbels oder Gegenstandes angeordneten Tragstruktur und eine Sperrklinke. Die Sperrklinke ist dazu bestimmt, die Tragstruktur in einer Stellung gewünschter Höhe zu halten. Die Tragstruktur ist durch mindestens eine Storchschnabelanordnung gebildet, die aus einer Vielzahl von aneinander angelenkten Parallelogrammen besteht, von denen ein bewegliches Teil mit der Sperrklinke versehen ist, die in einem Gesperre eingreift.

Die Tragstruktur ist von ineinander verschiebbaren Teleskopelementen umgeben, von denen das untere an der Basis und das obere am Boden des Möbel oder des Gegenstandes, wobei das erste Teleskopelement eine innere Schulter aufweist, die an einer unteren, äußeren Schulter eines nachfolgenden Teleskopelementes zum Anschlagen kommt, das eine obere, innere Schulter aufweist, die an einer äußeren Schulter eines weiteren Teleskopelementes usw. die anderen Elemente der Mehrzahl ist zum letzten oberen Element zum Anschlagen kommt, das einen Anschlag mit der oberen, inneren Schulter des entsprechenden unteren Teleskopelement aufweist.

Somit verhindert der Schutz des Mechanismus eine unmittelbare Berührung mit dem Mechanismus beim Anheben und Absenken des Mechanismus selbst. Es wird überdies auch verhindert, dass Fremdkörper in den Mechanismus selbst eintreten, wodurch dieser außer Betrieb gesetzt werden konnte. Die Berührung selbst mit einer Hand könnte über diese unangenehme Verletzungen verursachen.

In einer bevorzugten Ausführungsform ist der unterste Scheitel der Storchschnabelanordnung an der Basis angelenkt und der oberste Scheitel an der Auflage des Möbels oder des anzuhebenden Gegenstandes. Die Sperrklinke ist integrierender Teil des verriegelbaren und entriegelbaren Gesperres. Dieses ist mit einem den Enden einer Stange verbunden ist, die an ihrem anderen Ende die Sperrklinke trägt, die in einer geradlinigen Nut des Gesperres eingreift, das an seinem unteren Ende an der Basis angelenkt ist. Die Nut weist eine Vielzahl von in sie geneigt gerichteten Sperrzähnen aufweist, um die Sperrklinke aufzunehmen. Die Storchschnabelanordnung wird in der gewünschten Höhe arretiert, um in der Ruhestellung bzw. geschlossenen Storchschnabelanordnung soweit angehoben zu werden, bis die Sperrklinke ihre Verstellung beendet, um auf die gewünschte Höhe oder auf die Ruhestellung abgesenkt zu werden.

In einer Variante ist die Stange um 180 Grad um gebogenen ist.

Weitere Merkmale und Einzelheiten gehen aus den Ansprüchen und aus der folgenden beispielhaften und nicht begrenzenden Beschreibung unter Bezugnahme auf die beigefügte Zeichnung hervor. Es zeigen,
- Figur 1: einen schematischen vertikalen Schnitt eines Hebemechanismus in angehobener Stellung,
- Figur 2: einen schematischen vertikalen Schnitt eines Hebemechanismus, in einer angehobenen Stellung, um 90 Grad gegenüber der Figur 1 gedreht,
- Figur 3: einen schematischen vertikalen Schnitt des Hebemechanismus aus Figur 1, in zurückgezogener Stellung,
- Figur 4: ein Schaubild eines Hebemechanismus in einer Variante,
- Figur 5: eine schematische Seitenansicht des Hebemechanismus aus Figur 4.

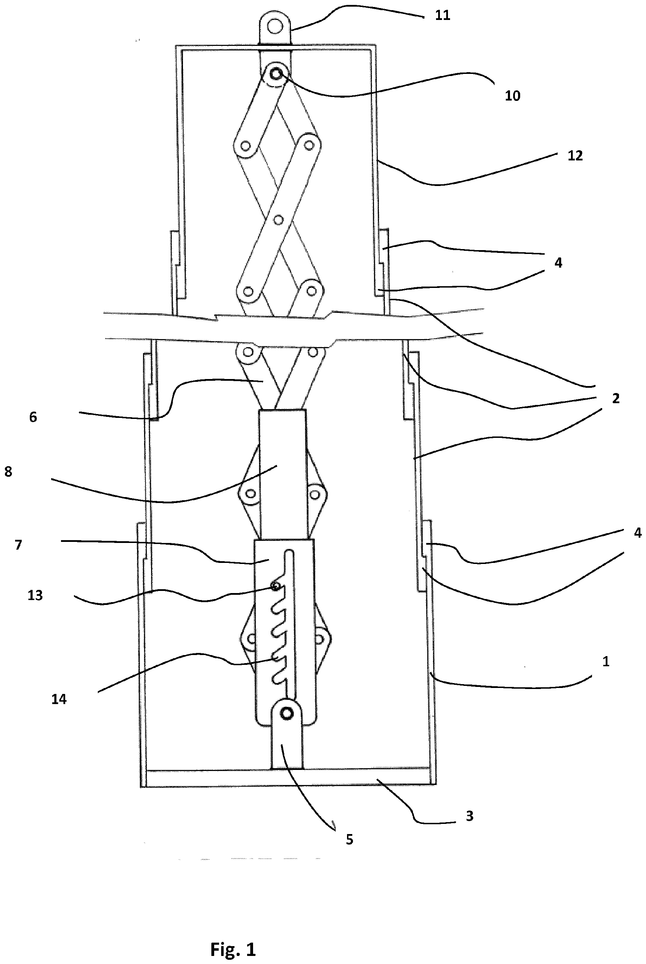

In Figur 1 ist ein festes Teleskopelement 1 gezeigt, das auch andere nicht dargestellten Formen haben kann.

Mit 2 sind ausziehbare und einziehbare Teleskopelemente angegeben, mit 3 die Basis, mit 4 Endanschläge, mit 5 eine untere Halterung eines Gelenksparallelogramms 6 und eines automatisch verriegelbaren und entriegelbaren Gesperres 7.

Mit 8 ist eine Eingriffsstange angegeben, die mit einem Anlenkbolzen des Gelenkparallelogramms 6 verbunden ist, während am unteren Ende das verriegelbare und entriegelbare Gesperre 7 verbunden ist.

Mit 10 ist das Gelenk des letzten Elementes des Gelenksparallelogramms angegeben, die Bezugsziffer 11 bezeichnet den Ansatz für das Anheben, der auch im Bedarfsfalle der unmittelbare Ansatz am Gelenk 10 des letzten Elementes des Gelenksparallelogramms sein kann.

Mit 12 das obere Ende, mit 13 ein Bolzen bzw. eine Sperrklinke des Gesperrs 7 und deren Aufnahme 14 angegeben.

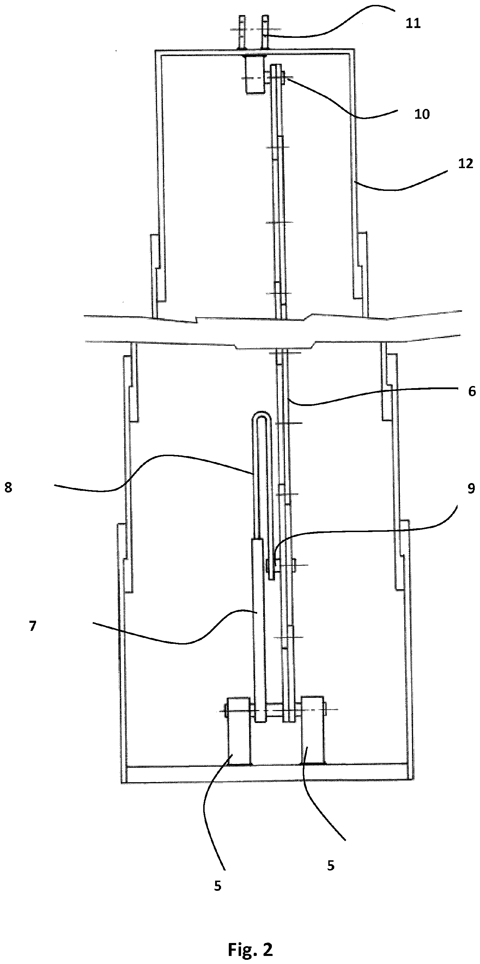

In der Figur 2 ist die untere Halterung 5 des verriegelbaren und entriegelbaren Gesperres 7 mit der Eingriffsstange 8 am Gelenksparallelogramm 6 am Anlenkbolzen 9.

Mit 10 ist das Gelenk des letzten Elements des Gelenksparallelogramms 6 gezeigt.

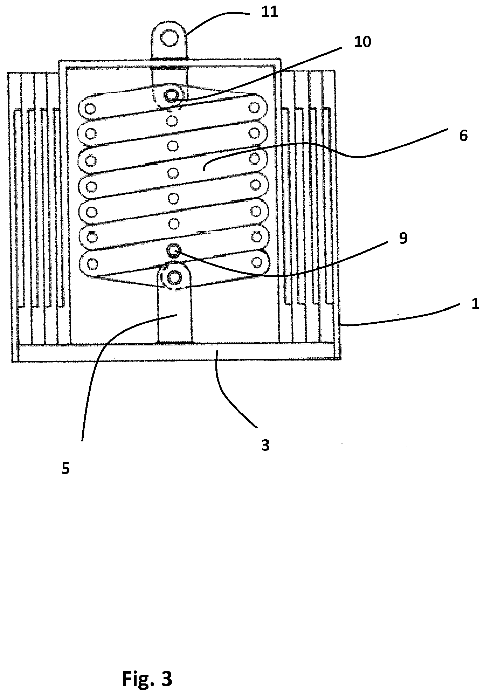

In Figur 3 ist das feste Teleskopelement 1 gezeigt, dass einige beliebige Form annehmen kann, während mit 3 die Basis, und mit 5 die untere Lagerung des Gelenksparallelogramms 6 gezeigt ist.

Weiterhin sind mit 6 das Gelenksparallelogramm, mit 9 der zweite Anlenkbolzen des Gelenksparallelogramms, mit 10 das Gelenk des letzten Elementes des Gelenksprogramms und mit 11 der Ansatz für das Anheben angegeben sind.

Wird mindestens ein Hebeansatz 11 angehoben, wobei das obere Ende 12 (oder auch über das Gelenk 10 des Gelenksparallelogramms) das Gelenk 10 selbst ist, das mit dem letzten Element des Gelenksparallelogramms 6 in Eingriff steht, so wird das gesamte oder ein Teil des Gelenksparallelogramms 6 angehoben oder abgesenkt, das über den Anlenkbolzen 9 mit der Eingriffsstange 8 in Eingriff steht, die mit dem verriegelbaren und entriegelbaren Gesperr 7 verbunden ist, und sich ausdehnt und zurückzieht, wobei zuerst das Gesperre bis zum Hubende gebracht wird oder in einigen Fällen zuerst im Freilauf bewegt wird bis zur gewünschten Höhe unter Verriegelung der Sperrklinke 13 in einer Aufnahme 14.

Für einen einwandfreien Betrieb benötigt man mindestens ein Gelenksparallelogramm und mindestens ein verriegelbares und entriegelbares Gesperre 7. Die Aufnahmen 14, welche die Sperrklinke 13 aufnehmen, können von den nachfolgenden oder vorangehenden mehr beabstandet sein, um die Entriegelung und die Absenkung der Teleskopelemente 2 und des Gelenksparallelogramm 6 zu erlauben, ohne das Gelenksparallelogramm 6 selbst bis seinem Ende anheben zu müssen, um die Verriegelung der Sperrklinke 13 zu erlauben, und in die abgesenkte Anfangsruhestellung zurückzukehren.

Das Gelenk 10 am letzten Element des Gelenksprogramms kann unmittelbar am anzuhebenden Element in Eingriff stehen, kann jedoch auch in einem nicht dargestellten Schlitten angelenkt sein.

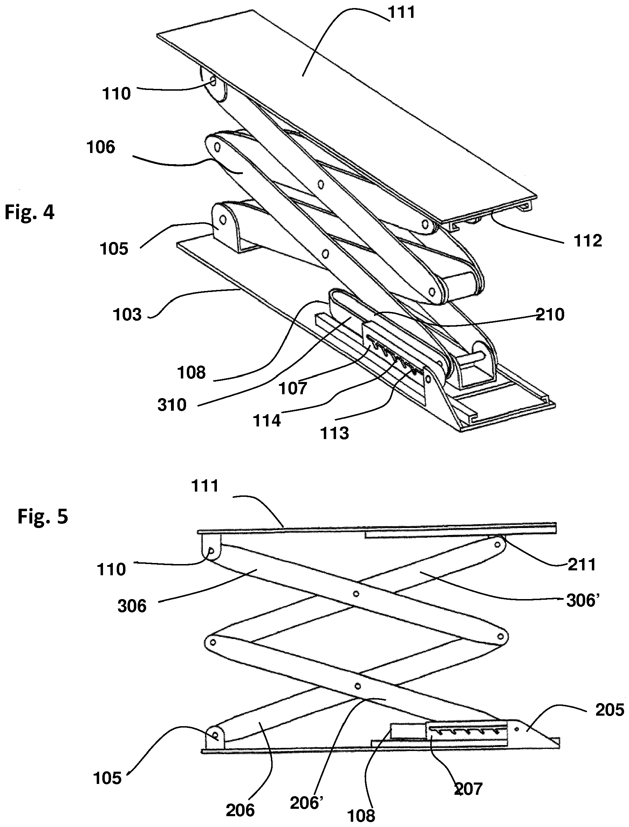

In Figur 4 und 5 ist eine Variante des Hebemechanismus gezeigt, bei der an einer Basis 103 zu einander beabstandet eine feste Halterung 105 und eine Halterung 205 befestigt sind. An der Halterung 105 ist das freie Ende einer Verlängerung 206 eines Parallelogramms 106 angelenkt, das Teil einer Vielzahl von Parallelogrammen einer Storchschnabelanordnung ist. Das freie Ende der anderen Verlängerung 206'ist hingegen am Ende eines Armes 210 eines abgebogenen Bügels 108 angelenkt, dessen anderes Ende des zweiten Armes 310 eine Sperrklinke 113 aufweist, die in eine Längsführung 107 eingereicht, die Schnappzähne 114 aufweist, in die die Sperrklinke 113 einschnappt und davon freigegeben wird. Die Längsführung 107 ist an ihrem freien Ende an der Halterung 105 angelenkt.

Um die scherenartige Bewegung des Pantographen zu erlauben, weist eine der Verlängerungen 306 des oberen Parallelogramms 106 ein Gelenk 110 auf, das an einer Auflage 111 eines anzuhebenden Gegenstandes fest liegt, während seine andere Verlängerung 306' ein freies Ende aufweist, das an einem Läufer 211 angelenkt ist, der in einer an der Auflage 111 festliegenden Führung verstellbar ist.

### Aufstellung der Bezugsziffern

- 1.: festes Teleskopelement
- 2.: ausführbare- einziehbare Teleskopelemente
- 3.: Basis
- 4.: Anschlag
- 5.: untere Halterung
- 6.: Gelenksparallelogramm
- 7.: verriegelbares und entriegelbares Gesperre
- 8.: Eingriffstange
- 9.: Anlenkbolzen
- 10.: Gelenk
- 11.: Hebeansatz
- 12.: oberes Ende
- 13.: Sperrklinke
- 14.: Aufnahme
- 103.: Basis
- 105.: feste Halterung
- 107.: Führung
- 108.: Bügel
- 110.: Gelenk
- 111.: Auflage
- 112.: Führung
- 113.: Sperrklinke
- 114.: Schnappzähne
- 205.: Halterung
- 206.: Verlängerung
- 206'.: Verlängerung
- 210.: erster Arm
- 211.: Läufer
- 306.: Verlängerung
- 306'.: Verlängerung
- 310.: zweiter Arm

## Patentansprüche

1. Hebeanordnung für Tische, Stühle, Roste, Kindersessel oder andere anzuhebende Gegenstände, umfassend mindestens eine senkrecht verstellbare, zwischen einer Basis (3) und dem Boden eines anzuhebenden Möbels oder Gegenstandes angeordnete Tragstruktur (6) und eine Sperrklinke (13, 113), die dazu bestimmt ist, die Tragstruktur (6, 106) in einer Stellung gewünschter Höhe zu halten, wobei die Tragstruktur durch mindestens eine Storchschnabelanordnung gebildet ist, die aus eine Vielzahl von aneinander angelenkten Parallelogrammen (6, 106) besteht, von denen ein bewegliches Teil mit der Sperrklinke(13, 113) versehen ist, die in einem Gesperre (7) eingreift, **dadurch gekennzeichnet, dass** die Tragstruktur (6, 106) von ineinander verschiebbaren Teleskopelementen (2) umgebenden ist, von denen das untere an der Basis (3) und das obere (12) am Boden des Möbel oder des Gegenstandes, wobei das erste Teleskopelement (1) eine innere Schulter (4), die an einer unteren, äußeren Schulter (4) eines nachfolgenden Teleskopelementes zum Anschlagen kommt, das eine obere, innere Schulter aufweist, die an einer äußeren Schulter eines weiteren Teleskopelementes usw. die anderen Elemente der Mehrzahl ist zum letzten oberen Element zum Anschlagen kommt, dass einen Anschlag mit der oberen, inneren Schulter des entsprechenden unteren Teleskopelement aufweist.

2. Hebeanordnung nach Anspruch 1, **dadurch gekennzeichnet, dass** der unterste Scheitel oder die untersten Verlängerungen der Storchschnabelanordnung an der Basis (3) angelenkt ist/sind und der oberste Scheitel oder die obersten Verlängerungen an der Auflage des Möbels oder des anzuhebenden Gegenstandes angelenkt ist/sind und die Sperrklinke (13) integrierender Teil des verriegelbaren und entriegelbaren Gesperres (7) ist, das mit einem den Enden einer Stange (8) verbunden ist, die an ihrem anderen Ende die Sperrklinke (13) trägt, die in einer geradlinigen Nut des Gesperres (7) eingreift, das an seinem unteren Ende an der Basis (3) angelenkt ist, wobei die Nut eine Vielzahl von in sie geneigt gerichteten Sperrzähnen (14) aufweist, um die Sperrklinke (13) aufzunehmen, wobei die Storchschnabelanordnung in der gewünschten Höhe arretiert wird, um in der Ruhestellung bzw. geschlossenen Storchschnabelanordnung soweit angehoben zu werden, bis die Sperrklinke (13) ihre Verstellung beendet, um auf die gewünschte Höhe oder auf die Ruhestellung abgesenkt zu werden.

3. Hebeanordnung nach Anspruch 1, **dadurch gekennzeichnet, dass** die Stange (8) um 180 Grad um gebogenen ist.

4. Hebeanordnung nach Anspruch 1, **dadurch gekennzeichnet, dass** der Anlenkbolzen (9) der Eingriffsstange (8) die zweite Anlenkung der Storchschnabelanordnung von der Basis (3) aus ist.

5. Hebeanordnung nach den vorstehenden Ansprüchen, **dadurch gekennzeichnet, dass** an einer Basis (103) mit Abstand eine feste Halterung (105) und eine Halterung (205) befestigt sind und an der festen Halterung (105) das freie Ende einer Verlängerung (206) eines einer Vielzahl von Parallelogrammen eines Pantographen angehörenden Parallelogramms (106) angelenkt ist, wobei das freie Ende der anderen Verlängerung (206') am Ende eines Armes (210) eines um 180° Grad umgebogenen Bügels (108) angelenkt ist, dessen andere Ende einen zweiten Arm (310) aufweist, der eine Sperrklinke (113) trägt, die in einer Längsführung (107) eingreift, die Schnappzähne (114) aufweist, in denen die Sperrklinke (113) zum Einschnappen gebracht werden kann, wobei die Längsführung (107) an ihrem freien Ende an der Halterung (105) angelenkt ist.

6. Hebeanordnung nach den vorstehenden Ansprüchen, **dadurch gekennzeichnet, dass** zur Ermöglichung der Scherenbewegung des Pantographen eine der Verlängerungen (306) des oberen Parallelogramms (106) ein an der Auflage (111) eines anzuhebenden Gegenstandes fest liegendes Gelenk (110) aufweist, während seine andere Verlängerung (306') ein freies Ende aufweist, das an einem Läufer (211) angelenkt ist, deren in einer an der Auflage (111) festliegenden Führung (112) verschiebbar ist.

## Claims

1. A lift mechanism for tables, chairs, bedbases, high chairs for children or other objects to be lifted, comprising at least one vertically displaceable load-bearing structure (6) disposed between a base (3) and the bottom of a piece of furniture or element to be lifted, and a pawl (13, 113) designed to keep the load-bearing structure (6,106) in an desired height position, wherein the load-bearing structure (6) is composed of at least one pantograph, which is composed of a plurality of mutually linked linkages (6,106), whereof a moving part is equipped with the pawl (13, 113) which engages with a ratchet (7), **characterized in that** the load-bearing structure (6,106) is surrounded by mutually sliding telescopic elements (2), the bottom one whereof is rigidly joined to the base (3) and the top one (12) to the bottom of the piece of furniture or object, the first telescopic element (1) has an inner shoulder (4), which is adapted to abut a lower outer shoulder (4) of a next telescopic element, which has having an upper inner shoulder adapted to abut an outer shoulder of a further telescopic element and so forth for the other telescopic elements of the plurality to the last top telescopic element, which has an abutment with the upper inner shoulder of its respective lower telescopic element.

2. A mechanism as claimed in claim 1, **characterized in that** the lower vertex or the lower extensions of the pantograph is/are linked to the base (3) and the upper vertex or the upper extensions is/are linked to the bottom of the piece of furniture or the object to be lifted and the pawl (13) forms an integral part of the lockable and releasable ratchet (7) connected to one of the ends of a rod (8) which has the pawl (13) at its other end, engaged in a straight groove of the ratchet (7), which is linked at its lower end to the base (3), the groove has a plurality of inclined latching teeth (24) adjacent thereto, to receive the pawl (13), whereby the pantograph is stopped at the desired height and then move back to the rest position, i.e. with the pantograph closed and the pawl (13) rises to its limit-stop position, such that the latter may move down to the desired height or to the rest position.

3. A mechanism as claimed in claim 1, **characterized in that** the rod (8) is bent on itself 180 degrees.

4. A mechanism as claimed in claim 1, **characterized in that** the trunnion (9) of the engagement rod (9) is the second link of the pantograph from the base (3).

5. A mechanism as claimed in any of the preceding claims, **characterized in that** a base (103) has a stationary support (105) and a support (205) fixed thereto at a distance, the support (105) is linked to the free end of an extension (206) of a linkage (106) that is part of a plurality of linkages of a pantograph, the free end of the other extension (206') being linked to the end of one arm (210) of a 180°-bent bracket (108), the other end of the second arm (310) carrying a pawl (113) which engages in a longitudinal guide (107) having snap teeth (114), wherein the pawl in snap fashion, such that the longitudinal guide (107) will be linked at its free end to the support (105).

6. A mechanism as claimed in the preceding claims, **characterized in that** in order to provide the scissors-like movement of the pantograph, one of the extensions (306) of the top linkage (106) has a joint (110) rigidly joined to a footplate (111) of an object to be lifted, whereas the other extension (306') thereof has a free end linked to a slider (211) that slides in a guide (112) rigidly joined to the footplate (111).

## Revendications

1. Mécanisme de levage pour des tables, des chaises, des sommiers, des chaises hautes pour bébés ou d'autres objets à lever, comprenant au moins une structure porteuse déplaçable verticalement (6), située entre une base (3) et le fond d'un meuble ou un élément à lever, et un cliquet (13, 113) conçu pour maintenir la structure porteuse (6, 106) dans une position en hauteur souhaitée, dans lequel la structure porteuse (6) est composée d'au moins un pantographe, composé d'une pluralité de parallélogrammes (6, 106) articulés l'un à l'autre, dont une partie mobile est pourvue du cliquet (13, 113), venant en engagement avec un encliquetage (7), **caractérisé en ce que** la structure porteuse (6, 106) est entourée par des éléments télescopiques (2) coulissants l'un contre l'autre, dont l'élément de fond est solidaire de la base (3) et l'élément de sommet (12) est solidaire du fond du meuble ou de l'objet, le premier élément télescopique (1) comporte un épaulement intérieur (4), apte a venir en butée avec un épaulement extérieur inférieur (4) d'un élément télescopique successif, celui-ci ayant un épaulement intérieur supérieur apte à venir en butée avec un épaulement extérieur d'un autre élément télescopique et ainsi de suite pour les autres éléments télescopiques de la pluralité jusqu'au dernier élément télescopique de sommet, venant en butée avec l'épaulement intérieur supérieur de son élément télescopique inférieur respectif.

2. Mécanisme selon la revendication 1, **caractérisé en ce que** le sommet inférieur ou les prolongements inférieurs du pantographe est/sont lié/s à la base (3) et le sommet supérieur ou les prolongements supérieurs est/sont articulés au fond du meuble ou de l'objet à lever, et le cliquet (13) fait partie intégrante de l'encliquetage verrouillable et déverrouillable (7) relié à l'une des extrémités d'une tige (8) ayant le cliquet (13) à son autre extrémité, engagé dans une rainure droite de déverrouillable (7), qui est liée à son extrémité inférieure à la base (3), la rainure ayant à son côté une pluralité de dents de verrouillage inclinées (24), pour recevoir le cliquet (13), le pantographe d'arrêtant ainsi à la hauteur désirée et revenant en suite en position de repos, c'est-à-dire avec le pantographe fermé et le cliquet (13) s'élevant jusqu'à son fin-de-course, de sorte que ce dernier puisse déscendre jusqu'à la hauteur souhaitée ou à la position de repos.

3. Mécanisme selon la revendication 1, **caractérisé en ce que** la tige (8) se replie sur elle-même à 180 degrés.

4. Mécanisme selon la revendication 1, **caractérisé en ce que** le tourillon (9) de la tige d'engagement (9) est la deuxième articulation du pantographe à partir de la base (3).

5. Mécanisme selon l'une des revendications précédentes, **caractérisé en ce qu'** un support fixe (105) et un support (205) sont fixés à distance entre eux à une base (103), le support (105) est articulé à l'extrémité libre d'un prolongement (206) d'un parallélogramme (106) qui fait partie d'une pluralité de parallélogrammes d'un pantographe, l'extrémité libre de l'autre prolongement (206') étant articulée à l'extrémité d'un bras (210) d'un étrier replié à 180° (108), l'autre extrémité du second bras (310) portant un cliquet (113) qui s'engage dans un guide longitudinal (107), ayant des dents à encliqueter (114), dans lequel le cliquet à déclic, de sorte que le guide longitudinal (107) soit articulé avec son extrémité libre au support (105).

6. Mécanisme selon les revendications précédentes, **caractérisées en ce qu'** afin d'assurer le mouvement en ciseaux du pantographe, l'un des prolongements (306) du parallélogramme de sommet (106) comporte un joint (110) solidaire d'un appui (111) d'un objet à lever, tandis que l'autre prolongement (306') de celui-ci comporte une extrémité libre articulée à un curseur (211) coulissant dans un guide (112) solidaire de l'appui (111).
